# EUROPEAN PATENT APPLICATION

(11) **EP 4 279 424 A1**
(43) Date of publication of application: **22.11.2023**
(21) Application number: 23162232.5
(22) Date of filing: 16.03.2023
(51) Int. Cl.: B65G 27/20, B65G 27/28

(54) **A DISPENSING VIBRATORY CONVEYOR WITH REVERSING OPERATION FUNCTION**

(30) Priority: 18.05.2022 PL 44121822
(71) Applicant: Akademia Gorniczo-Hutnicza im. Stanislawa Staszica w Krakowie, 30-059 Krakow (PL)
(72) Inventor: ZMUDA, Weronika, 30-614 Krakow, ul.Pagorkowa 17/24 (PL); CZUBAK, Piotr, 30-231 Krakow, ul.Starowolska 25b (PL)
(74) Representative: Kowal, Elzbieta

(57) **Abstract**

A dosing vibrating conveyor with a reversible operation function, characterised in that the mass of the eliminator (5) is a frame surrounding the electro-vibrator (4) in such a way that, when projected onto the vertical, longitudinal plane of symmetry of the trough (1), the centre of gravity of the mass of the eliminator (5), coincides with the axis of rotation of the electro-vibrator shaft (4), and, moreover, the trough (1) has an secondary mass (7) rigidly attached to it, which meets the condition that, when projected onto the vertical, longitudinal plane of symmetry of the trough (1), the geometric centre of gravity of the trough structure (1) together with the secondary mass (7) coincides with the axis of rotation of the electro-vibrator shaft (4).

## Description

The object of the invention is a dosing vibratory conveyor with reverse operation function for the transport a feed or small elements, applicable wherever precise metering of the transported material is necessary, especially in the processing, glass, food, tobacco, etc. industries.

Reversible vibratory conveyors are known, equipped with two vibrators suspended from a trough, whose electric motors drive shafts with an unbalanced mass mounted on them, forcing vibrations directed perpendicularly to a vertical plane guided by the longitudinal axis of the trough. The trough, which is open at both ends, is elastically supported on a rigid base in an essentially horizontal orientation. Depending on the desired direction of material transport, one or the other vibrator is alternatively switching on. Such a solution is described, for example, in US patent description US5178259A. From another US patent description US5713457A is known, a reversible conveyor having one vibrator centrally suspended from a trough near the centre of gravity of the conveyor. The vibrator is equipped with a motor having an alternating direction of rotation. Identical vibration eliminators are mounted at both ends of the trough, causing flattening of the vibration ellipse of the main mass of the conveyor at an excitation frequency of the vibrator close to that of the eliminators. Each eliminator consists of an auxiliary mass suspended vertically from a trough on a spring. In this type of solution, the change of the conveying direction is carried out by changing the direction of rotation of the motor - which requires passing successively through the run-out of the machine and then through the transition resonance - constituting the non-productive time of the conveyor.

From the Polish patent description PL225660B1, there is known a vibrating conveyor with a controlled conveying speed having the possibility of reversible operation, containing a trough open at both ends, elastically supported on a rigid base in a substantially horizontal position, provided with a vibration drive suspended centrally from the trough near the centre of gravity of the conveyor, and whose electric motor drives a shaft with an axis perpendicular to the vertical plane through the longitudinal axis of the trough and on which is mounted an unbalanced mass which forcing the vibrations, and moreover, there are two or more Frahm vibration eliminators connected to the trough of the conveyor, wherein each one of them is made up of an auxiliary mass suspended from the trough on a spring. The vibration eliminators have equal natural frequencies and in pairs are symmetrically spaced on both sides of the shaft axis, and their auxiliary masses are guided along parallel directions deviated from the horizontal by an angle, adjustable within 180° from the horizontal.

From the Polish patent application P.435830 a vibratory conveyor is known, comprising a trough open at least at one end in a substantially horizontal position, elastically supported on a rigid base by means of helical springs, and a Frahm dynamic eliminator, which is the mass of the eliminator, elastically suspended from the trough structure by means of a system of spring bars, inclined to the horizontal at the same angle, the centre of gravity of the mass of the eliminator coinciding in the horizontal view with the centre of gravity of the trough, and further comprising a vibration drive fixed to the trough, connected by known means of transmission to an electric motor equipped with a speed controller, which is an inverter. The vibratory drive constitutes a single inertial electrovibrator which has the shaft axis perpendicular to a vertical plane drawn through the axis of the trough and passing through the centre of gravity of the trough.

Thanks to the construction of the conveyor according to the invention, the operating dynamics are improved, allowing less wear of its components and more precise stopping and dosing.

The essence of a metering vibrating conveyor with a reversible operation function, comprising a trough open at least at one end in an essentially horizontal position, supported on a rigid base by means of elastic elements, and a Frahm dynamic eliminator, the mass of the eliminator being suspended from the trough structure by means of an elastic directional suspension, further comprising a vibration drive, connected to the trough by means of known means of transmission to an electric motor equipped with a speed controller, said vibration drive being a single inertial electro - vibrator with a shaft axis perpendicular to a vertical plane through the longitudinal axis of the trough, wherein the mass of the eliminator is a frame surrounding the electro-vibrator in such a way that, when projected onto the vertical longitudinal plane of symmetry of the trough, the centre of gravity of the mass of the eliminator coincides with the axis of rotation of the shaft of the electro-vibrator, which is situated in a space inside this frame. Furthermore, the trough has an additional mass rigidly attached to it, the structure of which meets the condition that, when projected onto the vertical, longitudinal plane of symmetry of the trough, the geometric centre of gravity of the trough structure together with the additional mass coincides with the axis of rotation of the electro-vibrator shaft.

It is advantageous if the elastic directional suspension is an arrangement of spring strips inclined at the same angle with respect to the horizontal.

In particular, it is advantageous when the angle of inclination of the spring strips is 45°.

It is advantageous when the spring elements are coil springs.

Also, it is advantageous when the speed controller of the motor driving the electro-vibrator is an inverter.

Furthermore, it is advantageous when the secondary mass of the trough consists of two frames or framework attached to the trough, symmetrically on both sides of the trough, and it is particularly advantageous when the frames or frameworks constituting the secondary mass are connected by at least one stiffening beam.

The conveyor according to the invention is illustrated in the drawing, in which fig. 1 shows a perspective view of the entire conveyor, fig. 2 shows an enlarged side view of a section of the conveyor, fig. 3 shows a perspective view of the conveyor from the side front view, and fig. 4 shows an example of the operating characteristics of the conveyor.

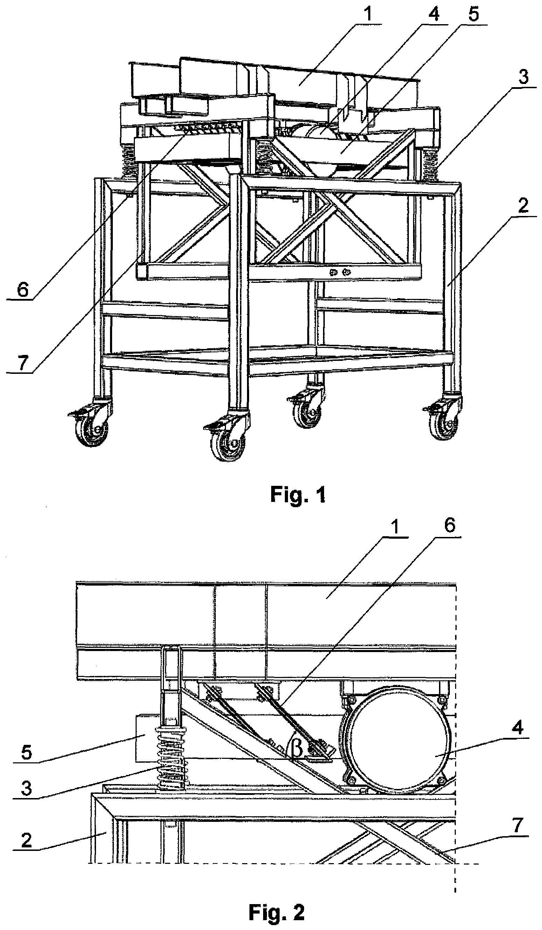

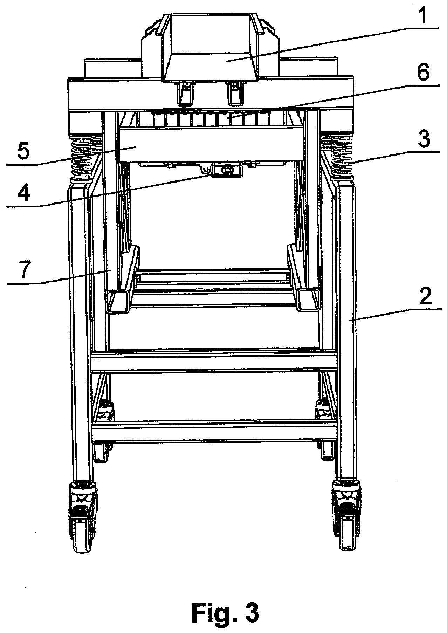

The dosing vibrating conveyor (fig. 1, fig. 2), embodiment as disclosed has a one-sided open, horizontal trough 1, which is elastically supported on a rigid base 2 by means of spring elements 3, which are helical springs symmetrically located with respect to the trough 1 near its ends. A vibration drive is attached to the trough 1, which is a single inertia electro-vibrator 4 with a shaft axis perpendicular to the vertical plane drawn through the longitudinal axis of the trough 1, equipped with a driving electric motor, connected to a speed controller (not shown in the figure), which is an inverter. The conveyor is equipped with a Frahm dynamic eliminator, which is a mass of eliminator 5 in the shape of a flat frame, elastically suspended on the structure of the trough 1 in a horizontal position by means of a system of spring strips, constituting an elastic directional suspension 6, inclined to the horizontal at a uniform angle β=45°. The spring strips are fixed on both sides by a bolt system to the fixed fastening plates on the underside of the trough 1 on one side and inside the mass frame of the eliminator 5 on the other side. On the vertical longitudinal plane view of symmetry of the trough 1, the centre of gravity of the mass of the eliminator 5 coincides with the axis of rotation of the shaft of the electro-vibrator 4. The electro-vibrator 4 is located inside the frame constituting the mass of the eliminator 5 and is fixed to the trough 1 by a set of screws. The trough 1 has an secondary mass 7 rigidly attached to, which satisfies the condition that, when projected on the vertical, longitudinal plane of symmetry of the trough 1, the geometric centre of gravity of the trough 1 structure, together with the secondary mass 7, coincides with the axis of rotation of the electro-vibrator 4 shaft. The secondary mass 7 provides two flat, rectangular frames, fixed to the trough 1 symmetrically on both sides of and connected at the bottom horizontal beam (fig.3). The secondary mass 7 has the same freedom of movement as the trough 1, to which it is rigidly attached.

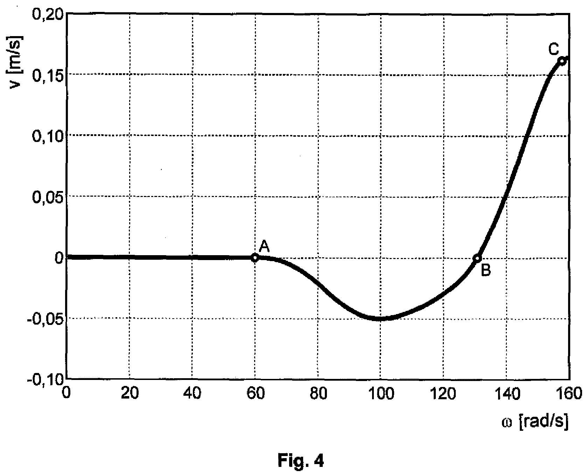

The construction according to the invention allows the centre of gravity of the eliminator mass 5 to be maintained in the axis of rotation of the unbalanced mass of the electro-vibrator 4. The task of the eliminator mass 5 is to eliminate vibrations of the trough 1 in the direction of movement of this mass, with appropriate control of the frequency ω forcing the electro-vibrator 4 according to the Frahm eliminator principle. At this frequency ω, the maximum possible transport velocity at the operating point C is obtained and the vibrations of the trough 1 have elliptical form. In order to quickly stop the transport, it is possible either to control the speed of the unbalanced mass of the electro-vibrator 4 or to completely switch off its drive, which will additionally cause that during the decrease of the frequency ω of the forcing from the theoretical operating point C, the conveyor will spontaneously move the feed away from the edge of the trough 1. With precise dosing, such behaviour of the system ensures that an additional and undesirable part of the material will not be pushed off the trough 1. According to the diagram of the average transport speed v as a function of the forcing frequency ω (fig.4 ), the decreasing spinning speed of the electrostatic precipitator passes through zone AB, where reverse transport takes place (v<0), and then through zone 0A, where transport is completely stopped (v=0).

### Designations on the drawing:

1 - trough
2 - base
3 - spring element
4 - electro-vibrator
5 - eliminator mass
6 - directional suspension
7 - secondary mass

## Claims

1. A dosing vibrating conveyor with reversible operation, comprising a trough open at least at one end in a substantially horizontal position, supported on a rigid base by means of elastic elements, and a Frahm dynamic eliminator constituted by the mass of the eliminator suspended from the trough structure by means of an elastic directional suspension, further comprising a vibratory drive connected to the trough, connected by known means of transmission to an electric motor equipped with a speed controller, said vibratory drive being a single inertial electric vibrator with a shaft axis perpendicular to a vertical plane through the longitudinal axis of the trough, **characterised in that** the mass of the eliminator (5) is a frame surrounding the electro-vibrator (4) in such a way that, when projected onto the vertical longitudinal plane of symmetry of the trough (1), the centre of gravity of the mass of the eliminator (5) coincides with the axis of rotation of the shaft of the electro-vibrator (4), which is situated in the space inside this frame, and furthermore the trough (1) has an secondary mass (7) rigidly attached to it, which meets the condition that, when projected on the vertical longitudinal plane of symmetry of the trough (1), the geometric centre of gravity of the trough structure (1) together with the secondary mass (7) coincides with the axis of rotation of the electro-vibrator shaft (4).

2. The dosing vibrating conveyor, according to claim. 1, **characterised in that** the elastic directional suspension (6) consists of a system of spring strips inclined at the same angle (β) to the horizontal.

3. The dosing vibrating conveyor according to claim 2, **characterised in that** the angle (β) is 45°.

4. The dosing vibrating conveyor, according to claim. 1, **characterised in that** the spring elements (3) are helical springs.

5. The dosing vibrating conveyor, according to claim 1, **characterised in that** the speed controller of the motor driving the electro-vibrator (4) is an inverter.

6. The dosing vibrating conveyor according to claim 1, **characterised in that** the secondary mass (7) consists of two frames or trusses attached to the trough (1) symmetrically on both sides thereof.

7. The dosing vibrating conveyor according to claim. 6, **characterised in that** the frames or framework constituting the secondary mass (7) are connected by at least one stiffening beam.
